# EUROPEAN PATENT SPECIFICATION

(11) **EP 3 355 149 B1**
(45) Date of publication and mention of the grant of the patent: **07.06.2023**
(21) Application number: 17154030.5
(22) Date of filing: 31.01.2017
(51) Int. Cl.: G05D 1/02, B66F 9/06, B66F 9/075, B66F 11/04

(54) **MATERIAL HANDLING SYSTEM**
MATERIALHANDHABUNGSSYSTEM
SYSTÈME DE MANIPULATION DE MARCHANDISES

(43) Date of publication of application: 01.08.2018
(73) Proprietor: Toyota Material Handling Manufacturing Sweden AB, 595 81 MJÖLBY (SE)
(72) Inventor: TENGVERT, Peter, 591 52 Motala (SE); AHLBERG, Boris, 590 33 Fornåsa (SE)
(74) Representative: Zacco Sweden AB

(56) References cited:
- WO-A1-2016/134770
- JP-A- 2011 216 007
- KR-B1- 101 323 705
- US-A- 4 465 155
- US-A1- 2007 288 123
- US-A1- 2011 133 419

## Description

The present disclosure is related to a material handling system according to claim 1.

### BACKGROUND

Generally in material handling situations, in particular order picking in a warehouse, floor conveyors, fork-lift trucks, tiller trucks etc., are used. There are numerous advantages with this type of vehicles, they can be arranged to lift heavy goods, they can be easily operated by a trained operator, they are in general not demanding a considerable investment and they are often rugged and have a considerable life expectancy. It is possible to adapt these vehicles by changing load carriers and also by applying a mast such that goods can be fetched from considerably heights. It is even possible to apply a cabin that is lifted into the air in order to allow for the operator that performs order picking to pick at considerable heights, such as 14 meters. By order picking at considerable heights the warehouse can be very dense in terms of the base area. It is also possible to help the operator in numerous ways in order to increase the efficiency of order picking. For example it is possible to increase the travel speed of the floor conveyor by allowing the operator to temporarily ride with the floor conveyor on a platform. In order to further increase the order picking efficiency it is possible to provide long forks that can carry two pallets. Thus an operator can pick more orders at the same time and need not unload the single pallet, but can instead continue to pick to the second pallet.

Document US 2007/288123 A1 discloses a mobile driving unit that can move with an inventory holder to a first position and also to calculate the difference between the location of the inventory holder and the first point.

Document KR 101 323 705 B1 discloses a cargo transfer robot.

Document US 2011/133419 A1 discloses a cargo container handling cart.

Document JP 2011 216007 A discloses a transport cart system.

### SHORT DESCRIPTION OF THE INVENTION

It is not always possible to densify a warehouse by building a higher building. For example some warehouses are comprised in buildings housing supermarkets. In these conditions the available volume might not be possible to be increased, in particular the height of the warehouse cannot be changed. In order to increase efficiency there is a need for the operator performing the order picking operation to be able to carry out more orders at a time. It is also important to still have the flexibility of the previous operations using floor conveyors, fork-lifts etc. Thus for example applying conveyor systems with automatic transportation of goods and transporting them to shipping is highly effective, but is in terms of flexibility highly disadvantageous. Also the investment is much larger compared with the fork -lift operated warehouse.

It is thus suggested a material handling system according to claim 1.

The prior art does not at least disclose the characterizing portion of claim 1.

The advantage of this system is that it is possible to have several movable units to move together such that it is possible to order pick on many orders at the same time. There are no disadvantages with longer forks that are difficult to manoeuvre with in a warehouse with relatively narrow aisles. And as each movable unit has its own power source it is possible to charge or service an individual movable unit and still continue the order picking operation. The navigation device allows for each movable unit to independently determine its position in the warehouse, regardless of the position of the master movable unit. This makes the material handling system much more versatile and an operator can for example send goods from an order picking station to a check out station of a warehouse without needing to transport him to this position. When one movable unit is assigned as a master movable unit, this movable unit can control the operation of the other movable units, thereby achieving a group of movable units that can operate together in a warehouse, for transport of large amounts of goods. The system is also much more flexible than a conventional use of a floor conveyor or a fork-lift truck. By using the comprised wireless interface to send out a track signal the group of movable units can operate in cooperation and in control from the assigned master movable unit. The wireless interface preferably has at least one antenna for the output of the track signal and input to the assigned slave movable units. The assignment of the master/slave system is very simple by this method. No added hardware is needed, and all movable units can be assigned as masters or slaves.

According to a further aspect of the material handling system according the above, the drive wheel of each movable unit is positioned such that the movable unit can be manoeuvred such that the movable unit can turn around a point positioned in an area that is predetermined by 25%-75% of the longitudinal length and 0 %-100 % of the transversal width of the movable unit outer perimeter.

The advantage of this aspect is that the manoeuvrability is increased as the turn radius is very reduced compared with a movable unit that has the drive wheel positioned closer to one longitudinal end of the movable unit.

According to a further aspect of the material handling system according the above further is comprised a second drive wheel having a rotational axle. The second drive wheel preferably is positioned at the opposite longitudinal side of the first drive wheel. It is also more preferred that the rotational axle of the second drive wheel is coaxial with the rotational axle of the first rotational drive wheel.

The second drive wheel provides for a stable operation of the movable unit as torques of the driving wheels can be set up to out rule each other. Also manoeuvring is simplified as the drive wheels can operate in cooperation for example by rotating in opposite direction. It is particularly easy to predict the behaviour of the movable unit if the rotational axles are coaxial as the rotational point of the device will be positioned on this coaxial rotational axles.

According to a further aspect of the material handling system each movable unit comprises a hardware switch that that assigns the movable unit as master or slave, preferably the hard ware switch takes precedence over an assignment made by a computer executable software stored in the control unit.

The hardware switch gives visual and tactile information to the operator and provides for a very secure assignment of master and slave movable units respectively.

According to a further aspect of the material handling system the master movable unit comprises a handle that is higher than the limited base height, wherein the handle being arranged such that an operator travelling with the master movable unit can hold on to it for balance purposes. The master movable unit is otherwise preferably configured with the same hardware as a slave movable unit.

By having a handle installed the travel for an operator with the system is simplified. It is also safer for the operator to travel with a movable unit if he for balance purposes can hold on the handle. By having the same hardware in the movable units the material handling system is very versatile and a movable unit can perform in different roles easily.

According to a further aspect of the material handling system at least two of the movable units of the system have an attachment point for a handle, and that a movable unit is assigned as a master movable unit by applying a handle to one of the movable units, wherein the attachment point is provided with a detector that is able to detect that a handle is attached and communicate this to the control unit and by this assignment as master movable unit is enabled to be made by the installation of the handle. The assignment as master by applying a handle preferably takes precedence over other possible assignments as master. In a preferred aspect all of the movable units have the said attachment point including said detector.

By having a detector at the attachment point for the handle it is very easy to configure a movable unit as master, the operator can also immediately determine which movable unit is the master, by visual inspection of the system. Further making the assignment by applying the handle to take precedence over other possible assignments a very safe operation of the system is obtained as several movable units in a group cannot be assigned as masters at the same time.

According to a further aspect of the material handling system of the above, the handle is provided with an antenna for communication over the wireless interface, such as for sending out a track signal.

This aspect has the advantage that a very good reception of signals communicate over the wireless interface is achieved.

According to a further aspect of the material handling system of the above, the handle further comprises a control command central, the control command central, has a display for communication with an operator and has a local control unit that can process and give commands to the material handling system for control of order picking services by the operator.

The advantage of these features is that the operator can from the movable unit control the material handling system. He can also receive messages on the display, for example orders for picking goods.

According to a further aspect of the material handling system of the above wherein when a movable unit is assigned as a slave movable unit, the slave movable unit is arranged such that it can detect a track signal of the master movable unit, by means of the wireless interface and the control unit of the movable unit can determine a position in a group of slave movable units by combining predetermined information from the track signal and the detected information from the object sensor of the slave movable unit, wherein the system preferably thereby can create a train of movable units with dedicated positions for each movable unit, wherein the master movable unit is leading the train and the slave movable unit/s follows the master movable unit by means of the track signal and information from the object sensor.

The advantage of this is that a train means that each movable unit is following each other more or less in a line, thus the space of the warehouse for operation of the movable units can be further reduces as the width of the material handling system will essentially be defined by the width of each movable unit, or the turning radius of it.

According to a further aspect of the material handling system the track signal from the master movable unit can assign a new position for a slave movable unit in the system, such that a train of movable units can reverse its travelling direction by moving the master movable unit to the other end of the train and continue travel in this reversed direction. Each slave movable unit preferably reverses the direction of travel when performing the reverse direction operation. It is also thinkable that each slave movable unit turns into the new direction by performing an on the spot rotating movement by rotating around an axis of rotation that penetrates the load surface.

The manoeuvrability of the group of material handling movable units is thereby increased and the warehouse can be keep really dense compared with an order picking warehouse using ordinary floor conveyors or order picker trucks.

According to a further aspect of the material handling system at least one the movable units comprises a lifting device, preferably in the form of a scissor lift device, such that an operator at order picking can have an ergonomic height for picking and putting goods on the load surface of the movable units, The operation of the scissor lift device is preferably remotely operated by the operator via the wireless interface of the respective movable unit.

The advantage of this is that the operator can achieve an ergonomic position when handling the goods. By making the function remote controlled the operator can himself decide whether the scissor lift shall be applied or not. Thus he can decide to not apply it if the picked goods are above a certain height such that he will not need to lift the goods high in the air.

According to a further aspect of the material handling system further comprised is an external central control central, that is arranged to be able to send a dedicated signal to a particular movable unit, said signal comprising a navigation data, wherein the dedicated movable unit by the navigation device, such that it is able to move to a new position according to the received navigation data.

The combining of movable units and an external central control central provides for a system where each movable unit is controlled centrally an each movable unit can move to different positions in the warehouse where it is loaded with goods for further transport within the warehouse, for example to a check out station where the goods is later on transported for example to a customer that has ordered the goods.

According to a further aspect of the material handling system above, the height of the moving unit is achieved by applying a swivelling support wheel that has a bearing that runs close to the periphery of the housing of the wheel, thereby achieving a relatively low and compact support wheel.

By using this particular support wheel the movable unit can be achieved much lower than if a conventional swivelling wheel is used.

According to a further aspect of the material handling system above, each movable unit has a predetermined base height comprised between 50 mm - 350 mm, preferably 100 mm - 250 mm, most preferred 100 mm-200 mm. The outer dimension of each movable unit of the system is preferably equal to or less a length of 1210 mm and a width of 810 mm.

The limited height also makes it possible to have a clear view of the moving objects in the warehouse, as a standing operator has not his view obstructed by higher movable units. By reducing the outer dimensions it is also possible to densify the warehouse by positioning the warehouse shelfs closer to each other.

### LIST OF DRAWINGS

Figure 1 discloses a movable unit of the material handling system.
Figure 2 discloses the movable unit of figure 1 from the longitudinal side.
Figure 3 discloses a movable unit of the material handlings system with an on board operator and a handle for the operator.
Figure 4 discloses the material handling system in a warehouse situation.
Figure 5 discloses a reverse action of the train of the material handling system.
Figure 6 discloses a situation where a slave movable unit is assigned and travels to a new position independently.
Figure 7 discloses a material handling system of independent movable units.
Figure 8 discloses a movable unit comprising a scissor lift device.
Figure 9 discloses a movable unit comprising a handle and a control command central.
Figure 10a, 10b discloses a support wheel of a movable unit.

### DETAILED DESCRIPTION

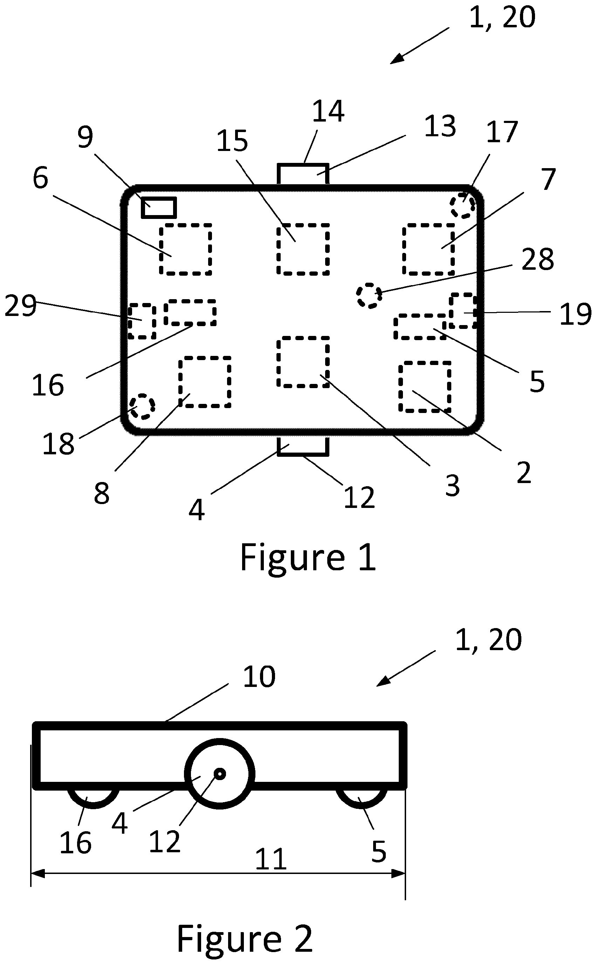

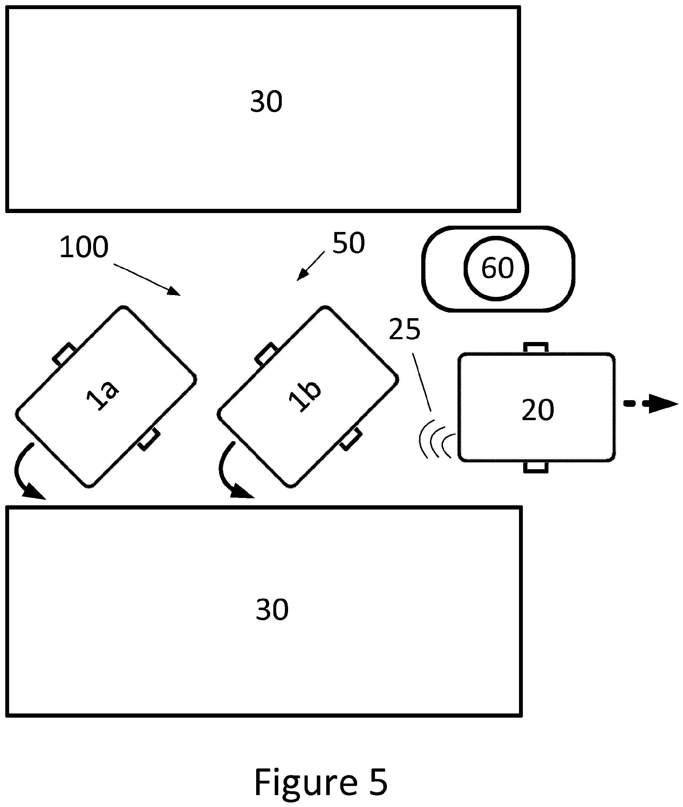

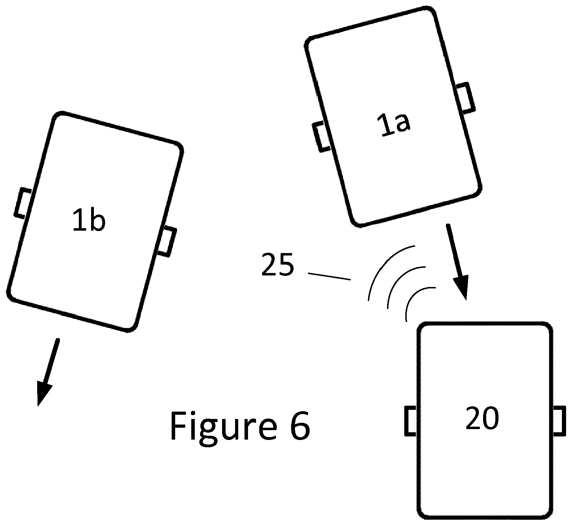

The present disclosure relates to a material handling system 100 comprising a group of movable units as can be seen in figure 1-8. The term group should be construed as at least two movable units.

Figure 1 discloses a movable unit 1, 20 of the system 100. The movable unit 1, 20 has several devices that are mandatory for the operation of the movable unit 1, 20.

A power source 2 is comprised in each movable unit. The power source 2 is for example a battery, such as a lead battery, a lithium ion battery, a lithium polymer battery, or any other suitable power source.

A drive motor 3 is comprised. The motor 3 can be an electric motor. A particularly good electric motor is a brushless motor, but a in general any electric motor is applicable both DC and AC motor.

A drive wheel 4, 13 is installed in the movable unit 1, 20. The drive wheel 4 can have any position on the movable unit. A preferred position is disclosed in figure 1 and 2, where the drive wheel 4 is positioned close to a longitudinal side of the movable unit 1, 20. Also the the drive wheel 4 of each movable unit 1, 20 can be positioned by 25%-75% of the longitudinal length and 0 %-100 % preferably 25 %-75 % of the transversal length of the movable unit 1, 20 outer perimeter. Thus the movable unit 1, 20 configured as such can turn around a vertical rotational axle that is cutting through a middle area of the load surface 10 of the movable unit. 0 %-100 of the transversal length means thus at any position transversally of the movable unit 1, 20, it should further be construed as that if the wheel is at 0 %-or 100 % it can have a side of it that protrude outside the contour if viewed from above, as seen in figure 1.

As an option a second drive wheel 13 having a rotational axle 14 can be installed as seen in figure 1. The second drive wheel 13 is best positioned at the opposite longitudinal side of the first drive wheel 4. As a preferred aspect the rotational axle 14 of the second drive wheel 13 is coaxial with the rotational axle 12 of the first rotational drive wheel 4.

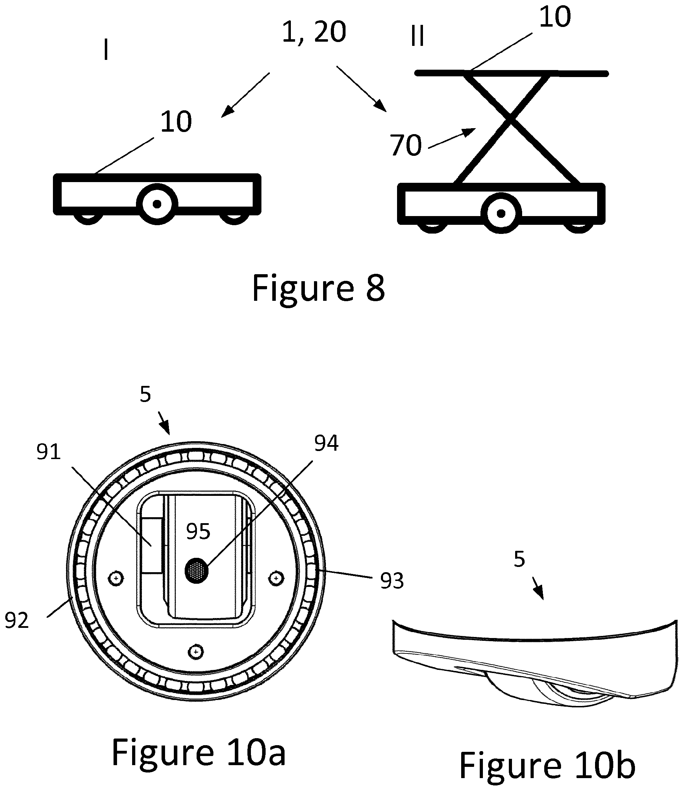

A stabilising support wheel 5 is installed on the movable unit 1, 20. The movable support wheel 5 is preferably a swivelling wheel, see figure 10a, 10b. The swivelling wheel 5 has a bearing 93 that runs close to the periphery of the housing 92 of the wheel see Figure 10a. The roller 95 of the swivelling wheels 5 need not be centred on the rotational axis 91 of the roller 95. By this arrangement the swivelling wheel 5 will easier reach a tow position when altering direction. Tow position should be understood as a position where the rotational axis 91 is behind the swivelling centres 94 of the respective swivel wheel 5. The diameter z of the swivelling wheel 5 is preferred to be smaller than the height of the movable device 1, 20. By using this kind of support wheel 5 it provides for keeping the movable device 1, 20 within the desired height limits. In particular it is provided for a relatively low swivelling wheel compared with generally used swivelling wheels as known by the skilled person.

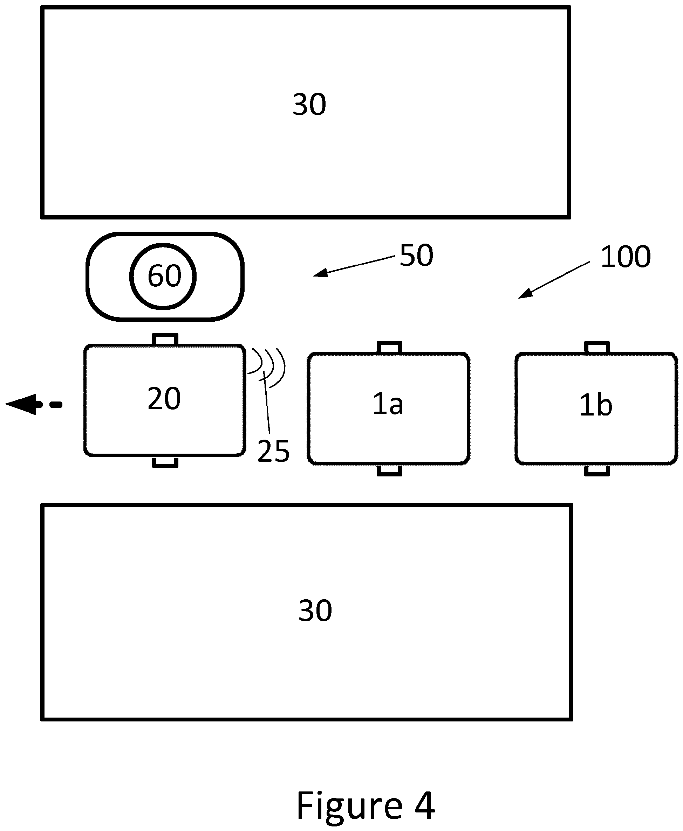

An object sensor 6 as disclosed in figure 1 is also incorporated. The object sensor 6 is preferably a laser sensor or a sonic sensor. The object sensor 6 can be comprised in a group of sensors comprising further object sensors 19, 29. The object sensor 6 is arranged for detection of objects that is positioned in the vicinity of the movable unit 1, 20 of the system 100. The object sensor 6 is applied for example for detection of walls or other movable units or the operator 60 as can be seen in figure 4. By applying several object sensors as one object sensor 19 in the front section and a further object sensor 29 in back section, it is possible to keep the height of the movable unit low as the object sensor need not be able to detect 360 degrees around the movable unit 1, 20. It is also thinkable to have only one object sensor 6 that detects 360 degrees around the movable unit 1, 20. The object sensor can also detect and recognise another movable unit 1, 20. It for example detects the units by scanning a marker on the other movable unit, the marker can be a bar code, an rfid transponder or any other marking that is detectable. The object sensor 6 or sensors is in general also used for anti-collision purposes. Thus in order for the movable unit to not stop the object sensor 6 needs to recognise the movable units 1, 20. The detection of other movable units can also be made by registering a relatively constant distance to the detected object despite that the movable unit is moving. That is when moving behind another movable unit that also is moving in the same direction, the control unit 8 of the movable unit can determine that it need not apply a braking operation.

The movable unit 1, 20 of the system 100 further has a wireless interface 7 for contact with the other movable units of the system. The wireless interface 7 is for example a Bluetooth enabled interface, or a Wi-Fi interface or any other suitable radio interface for communication that is local. The wireless interface 7 has a control unit that is local at the wireless interface or is comprised with in a control unit 8 of the movable unit 1, 20. The wireless interface 7 can have a single antenna comprised within the wireless interface 7. The wireless interface is according to one aspect provided with one or further antennas 17, 18. By applying several antennas it is possible to increase reception but also avoid protruding parts, i.e. allow for one antenna 17 to operate essentially in 180 degrees of the surroundings of the movable unit the other antenna 18 operate in the other 180 degrees of the surroundings of the movable unit 1, 20. As can be seen in figure 1 the two antennas can as an aspect be positioned in opposite corners of the movable unit 17, 18.

The movable unit 1, 20 comprises a control unit 8, see figure 1. In general the control unit 8 is able to control all sensors and communication devices of the movable unit. The preferred aspect of the control unit 8 is that it is a main control unit 8. Thus if other control units are installed in the movable unit 1, 20, the main control unit 8 can communicate and control these sub control units. The control unit 8 comprises memory circuits for storing computer readable software. The control unit 8 also comprises a processor.

The movable unit 1, 20 further comprises a navigation device 28. The navigation device 28 is preferably able to store and read a map of the warehouse. The navigation device 28 does not in general comprise GPS features, as the material handling system 100 is intended to be used indoors, where GPS signal is not at hand. By for example using coded RFID transponders in the warehouse the navigation device 28 can determine its position in the warehouse. Other known navigation systems are possible to use, such that bar codes or QR codes that can be detected by the navigation device 28. In this case the navigation device 28 comprises a reader for RFID, bar codes or QR codes. It is also thinkable to use SLAM-Simultaneous Landscaping and Mapping or RTLS-Real Time Location System. And of course combinations of all mentioned navigation/identification systems is thinkable.

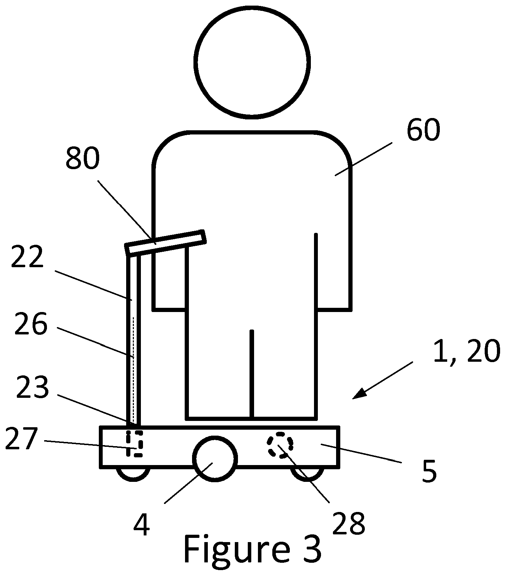

The movable unit 1, 20 has a load surface 10 as can be seen in figure 2. The load surface is for transport purposes in general constituted of the upper side of the movable unit. The load surface 10 can transport goods but also an operator as seen in figure 3. The load surface could also transport a holder for goods to be order picked, that is for example a pallet or a shelf system such as a roll cage.

As an alternative the load surface 10 can be raised in the air by a lift comprised in the movable unit 1, 20, figure 8. A lift should operate between a low position I and a high position II as seen in figure 8. The lift according to the preferred aspect is a scissor lift device. The operation of the lift device is preferred to be done by the operator 60 by means of remote control. The remote control is preferred to communicate over the wireless interface 7, but it could have a dedicated wireless interface for this operation, such as a Bluetooth or an infrared interface.

In the material handling system 100 each movable unit 1, 20 should have a limited base height. With base height is meant the height of the mean surface area unit comprising the load surface 10, over the surface on which the movable unit is operating. Also base height is not altered if a lift device is applied. The definition in this case is related to the position I as can be seen in figure 8. The second position II is not to be understood as the base height according to this application. The base height is comprised between 50 mm - 350 mm. This height range defines a very well-functioning material handling system 100 that can be easily operated. It also allows for goods that extends for example in the order of a meter in the height dimension to be order picked without generating a goods and movable unit system that is extensively high. Further the low base height allows for the system to be easily monitored by view by an operator. Also the relatively "low" movable unit 1, 20 can enter under warehouse racks, and thus further arrange a warehouse where individual units can manoeuvre more freely than if being higher and being obstructed by warehouse racks or shelf systems that are low.

According to an alternative the base height range is 100 mm-250 mm. This range is particularly advantageous as it resembles the dimension of the general pallet used in most warehouse situations. This base height range thus allows for applying the material handling system to a warehouse that is adapted for general pallet sizes that has already been implemented since long time. For example the movable units can enter under racks where the general pallets enters or the like.

According to a further alternative the height is 100 mm-200 mm, this height gives a narrow indication that is most suitable for a device of this kind that allows for both installation of needed hardware, but also allows for the device to not be higher than needed in order to achieve the needed advantages, in terms of applicability to a warehouse. In particular this range involves the standardized height 144 mm of a standardized EUR-pallet, Euro-pallet or EPAL-pallet. Thus if a warehouse on the floor level is adapted to the said pallets the movable unit 1, 20 will by having this height limitation be fully applicable.

The maximal outer dimensions of each movable unit 1, 20 of the system 100 are preferred to be equal to or less a length of 1210 mm and a width of 810 mm. This size is thus not to include if the drive wheels 4, 13 is protruding outside the outer perimeter. The size corresponds to the general dimensions of a standardized EUR-pallet, Euro-pallet or EPAL-pallet. Thus it is possible to design the movable unit 1, 20 with smaller dimensions, but it is not desirable to make the device larger than the stated width and length as this would be difficult to apply for a standard warehouse.

According to a further aspect of the material handling system each movable unit comprises a near field detector for detecting objects in an area that is comprised in the range of 0-5 meters from the movable unit, preferably the near field detector is a laser sensor or a sonic sensor.

In a preferred aspect of the disclosure of the material handling system 100 the system comprises at least one movable unit 20 being appointed as a master movable unit 20 and the other movable units 1 are being assigned as slave movable units 1 to said master movable unit 20, see figures 4-6. The master unit 20 is thus arranged to be the "leader" of the system. A slave unit 1 is thus assigned to follow the instructions from the master movable unit 20.

The master movable unit 20 is able by means of the wireless interface 7 to send out a track signal 25, figures 4-6, that can be detected by a correspondingly comprised wireless interface 7 by slave movable units 1 of the system 100 such that each slave movable unit 1 is able to determine and keep a predetermined distance to said master movable unit 20. The track signal 25 is thus coded such that the receiving slave unit 1 can determine a distance to the master movable unit 20, and also to keep this distance. This means that different slave units 1a, 1b keeps a different distance to the master movable unit 20. The track signal 25 is preferably a signal with timed detectable signal data that is particularly assigned to a particular slave movable unit 1. The assignment can be performed by applying a computer executable software stored in the control unit 8 that assigns the movable unit as master 20 or slave movable unit 1. But it is also possible that the software is applied only after a hardware switch of 9 each movable unit 1, 20 is switched. This hardware switch 9 assigns master or slave to the particular movable unit 1, 20. As discussed preferably the hard ware switch 9 takes precedence over an assignment made by a computer executable software stored in the control unit 8, or to be more exact the hardware switch assigns the master or the slave subroutine of that is stored in the control unit 8 of the particular movable unit 1, 20.

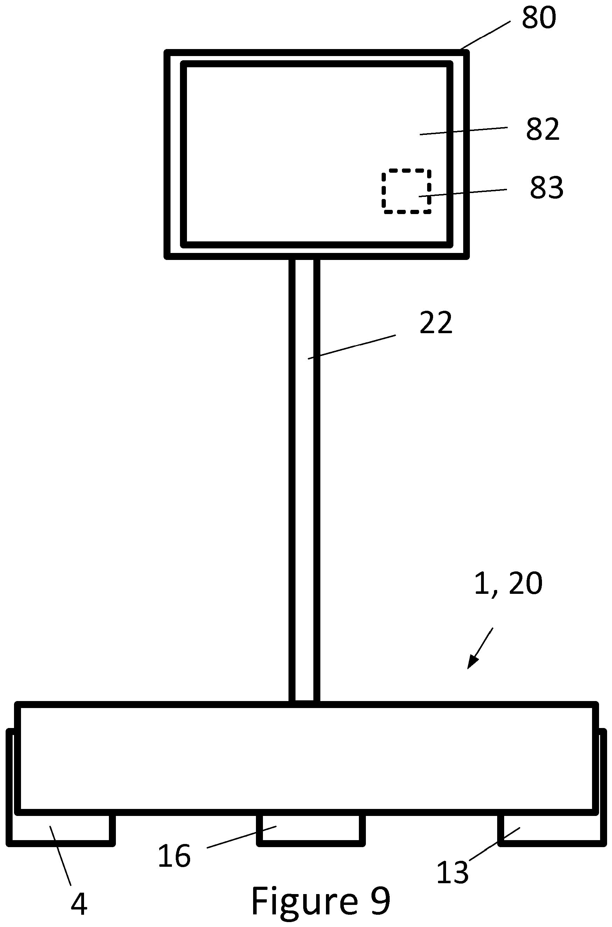

As seen in figure 3 and figure 9, the master movable unit 20 can comprise a handle 22. This handle 22 is higher than the limited base height as discussed above. The handle 22 is arranged for an operator 60, travelling with the master movable unit 20 to be able to hold on to the handle 22 for balance purposes. The master movable unit 20 is otherwise configured with the same hardware as the slave movable unit 1. The handle is preferably screwed into the master movable unit 20 by means of a threaded boring on the load surface 10.

The material handling system 100 can have several movable units 1, 20 that with an attachment point 23 for a handle 22. By this it is possible to switch unit on which the operator 60 is travelling.

In an alternative a movable unit 1, 20 is assigned as a master movable unit by applying a handle 22 to the movable unit. In order to achieve this the attachment point 23 is provided with a detector 27. The detector 27 can assess that a handle 22 is attached to the movable unit. Thus assignment as master movable unit 20 is made by the installation of the handle 22 by receipt of detection data 27 of the control unit 8. Thus the control unit 8 can run a subroutine in which the movable unit is assigned as master movable unit. Preferably the assignment as master movable unit by applying the handle 22 takes precedence over other possible assignments as master movable units. According to a preferred aspect all of the movable units 1, 20 have the said attachment point 23 including said detector 27, such that any movable unit can be assigned as master movable unit.

The handle 22 can be provided with an antenna 26 for communication over the wireless interface 7. The antenna 26 is operable to use any of the sending and receiving functions of the wireless interface 7, such as sending out a track signal 25.

The handle 22 according to a further aspect in line with all other aspects of a handle 22, comprises a control command central 80, figure 9. The control command central, has a display 82 for communication with an operator 60 and has a local control unit 83 that can process and give commands to the Material handling system 100 for control of order picking services by the operator 60.

It is of course in line with the above aspect of the control command central 80, that it is detachable from the handle 22 and thus can operate and control a material handling system 100 according to all aspects of it with or without a handle 22.

A movable unit 1 that is not assigned as a master movable unit 20, is by default a slave movable unit 1. A slave movable unit 1 is arranged such that it can detect the signal 25 of the master movable unit 20 and determine a position in a group of slave movable units 1. This can be made by combining predetermined information from the signal 25 that is received by the wireless interface 7 and communicated to the control unit 8.The control unit to this adds the detected information from the object sensor 6 of the slave movable unit 1. The system 100 thereby can create a train 50 of movable units 1, 20 with dedicated positions for each movable unit 1, 20. The master movable unit 20 is leading the train 50 and the slave movable unit/s 1 follows the master movable unit 20 by means of the track signal 25 and the detection made by the object sensor 6 or sensors 19, 29. The object sensor/s 6, 19, 29 then detects the master movable unit 20 in front of the movable unit 1a in question, and also the movable unit 1b behind the movable unit 1a if applicable, see figure 4.

The track signal 25 from the master movable unit 20 can assign a new position for slave movable unit 1a, 1b in the system. A train 50 of movable units can reverse its travelling direction by moving to the master movable unit 20 to the other end of the train and continue travel in this direction. Each slave movable unit 1a, 1b reverses the direction of travel when performing the reverse direction operation or each slave movable unit 1a, 1b turns into the new direction by performing an on the spot rotating movement by rotating around an axis of rotation that penetrates the load surface 10. By having this ability the train 50 of units easily can be manoeuvred in the tight dimensions of a dense warehouse. In particular if the racks 30 are so close to each other such that the isles are so narrow that a normal turn operation, where each movable unit maintain its position in the train 50 would be impossible.

In one aspect of the disclosure, the master unit 20 is not sending out a tracking signal 25. But the movable units 1a, 1b etc. is positioned in a position in the train 50. Then the object detecting sensors 6, 19, 29 is used for detecting the movable unit 1 in front and back of the master movable unit, and the movable units 1a, b simply follows the closest movable unit by using the detector at the front of the movable unit, i.e. 19 in fig 1.

By using the navigation device 28 for independent navigation purposes the movable unit 1 can be assigned to navigate to a new assigned position independently of a master movable unit 20. This assignment is preferably made by the operator 60 or by scanning a barcode, RFID device of QR code which assigns the new position to the movable unit 1. The movable unit 1 as assigned to be independent is then not a strict slave movable unit, nor a master movable unit; instead it is an independent unit as it moves to the new position. From the new position the independent movable unite can be returned to a train 50 of units that is moving with the operator 60, by using the same navigation system as when leaving the operator 60.

A movable unit 1, 20 of the material handling system 100 can have a lifting mechanism. The lifting mechanism is preferably in the form of a scissor lift device 70. An operator 60 in an order picking situation can thus achieve an ergonomic height for picking and putting goods on the load surface 10 of the movable unit by applying the lifting device. The operation of the scissor lift device 70 is preferably in one aspect remotely operated by the operator 60 via the wireless interface of the respective movable unit 1, 20.

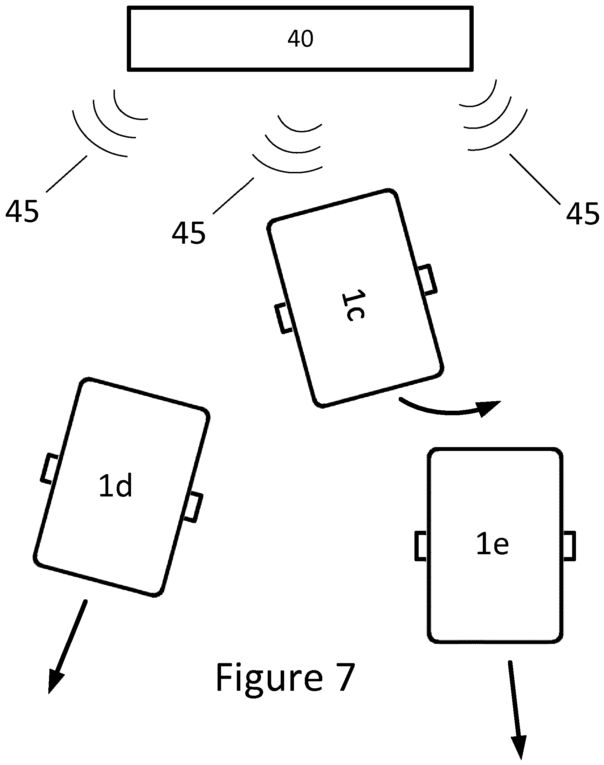

The material handling system 100 can further be operated without a master movable unit. In order to achieve this an external central control central 40 is applied. The external control central is arranged to be able to send dedicated signals 45 to a dedicated movable unit 1c, 1d, 1e comprising a navigation data. The dedicated movable unit 1c, 1d, 1e is arranged using the navigation device 28 and applying the navigation data, such that it is able to move to a new position according to the received navigation data. Thus the material handling system 100 is made up from a group, or swarm of completely independent movable units 1c, 1e, 1d, see figure 7. In this configuration the material handling system 100 is preferably used with stationary operators 60 that only load the independent units at different positions in the warehouse.

The above different aspects of the material handling system 100 should not be taken alone and as strict embodiments. All aspects discussed above can be combined with each other. It is for example thinkable that all movable units have a handle, event though not preferred. It is also thinkable to have movable units that move with a master movable unit, in the same warehouse where independent movable units is also operating. A unit with a handle does for example not have to be a master unit, but can be controlled by the external central control central 40.

## Claims

1. Material handling system (100) comprising a group of movable units (1, 20), wherein each movable unit (1, 20) comprises:
a power source (2),
a drive motor (3)
a drive wheel (4, 13) powered by the drive motor (3, 15),
a stabilising support wheel (5),
an object sensor (6, 19, 29) for detecting objects in the surroundings of the movable unit,
a wireless interface (7) for contact with the other movable units of the system,
a control unit (8),
a load surface (10),
a navigation device (28),
wherein each movable unit has a limited base height, wherein with base height is meant the height of the mean surface area of the unit comprising the load surface (10), over the surface on which the movable unit is operating,
**characterized in that**
the system comprises at least one movable unit (20) being appointed as a master movable unit (20) and the other movable units (1) are being assigned as slave movable units (1) to said master movable unit (20), wherein the master movable unit (20) by means of the wireless interface (7) is adapted to send out a track signal (25) that can be detected by comprised wireless interfaces (7) by slave movable units (1) of the system (100) such that each slave movable unit (1) is able to determine and keep a predetermined distance to said master movable unit (20), wherein each movable unit (1, 20) is assigned as master or slave movable unit by applying a computer executable software stored in the control unit (8) that is configured to assign the movable unit as master (20) or slave movable unit (1), preferably the wireless interfaces of the movable units (1, 20) comprise at least one antenna (17,18, 26).

2. Material handling system (100) according to claim 1, wherein the rotational axle (12, 14) of the drive wheel (4) of each movable unit (1, 20) is positioned such that the movable unit (1, 20) is adapted to turn around a point positioned in an area that is predetermined by 25%-75% of the longitudinal length and 0 %-100 %, preferably 25 % - 75 % of the transversal width of the movable unit (1, 20) outer perimeter.

3. Material handling system (100) according to claim 1 or 2, wherein further each movable unit comprises a second drive wheel (13) having a rotational axle (14), preferably the second drive wheel is positioned at the opposite longitudinal side of the first drive wheel (4), even more preferred the rotational axle (14) of the second drive wheel (13) is coaxial with the rotational axle (12) of the first rotational drive wheel (4).

4. Material handling system (100) according to any of the claims 1, wherein each movable unit (1, 20) comprises a hardware switch (9) that is configured to assign the movable unit (1, 20) as master or slave, preferably the hard ware switch (9) takes precedence over an assignment made by a computer executable software stored in the control unit (8).

5. Material handling system (100) according to any of the claims 1, wherein the master movable unit (20) comprises a handle (22) that is higher than the limited base height, wherein the handle (22) being arranged such that an operator (60) travelling with the master movable unit (20) can hold on to it for balance purposes, preferably the master movable unit (20) is otherwise configured with the same hardware as a slave movable unit (1).

6. Material handling system (100) according to any of the claims 1 or 4-5, wherein at least two of the movable units (1, 20) of the system (100) have an attachment point (23) for a handle (22), and that a movable unit (1, 20) is assigned as a master movable unit by applying a handle to one movable unit (1, 20) intended to be assigned as master movable unit, wherein the attachment point (23) is provided with a detector (27) that is adapted to detect that a handle (22) is attached and communicate this to the control unit (8) and by this detector (27) the assignment as master movable unit (20) is enabled by the installation of the handle (22), preferably the assignment as master by applying a handle (22) takes precedence over other possible assignments as master, even more preferred all of the movable units (1, 20) have the said attachment point (23) including said detector (27).

7. Material handling system (100) according claim 5 or 6, wherein the handle (22) is provided with an antenna (26) for communication over the wireless interface (7), such as for sending out a track signal (25).

8. Material handling system (100) according to any of the claims 5-7, wherein the handle (22) further comprises a control command central (80), the control command central, has a display (82) for communication with an operator (60) and has a local control unit (82) that is adapted to process and give commands to the Material handling system (100) for control of order picking services by the operator (60).

9. Material handling system (100) according to any of the claims 1 or 4-8, wherein when a movable unit is assigned as a slave movable unit (1), the slave movable unit (1) is arranged such that it is adapted to detect a track signal (25) of the master movable unit (20), by means of the wireless interface (7) and the control unit (8) of the movable unit is adapted to determine a position in a group of slave movable units (1) by combining predetermined information from the track signal (25) and the detected information from the object sensor (6) of the slave movable unit (1), wherein the system (100) preferably thereby can create a train (50) of movable units (1, 20) with dedicated positions for each movable unit (1, 20), wherein the master movable unit (20) is leading the train (50) and the slave movable unit/s (1) follows the master movable unit (20) by means of the track signal (25) and information from the object sensor (6).

10. Material handling system (100) according to claim 9, wherein the track signal (25) from the master movable unit (20) is adapted to assign a new position for a slave movable unit (1a, 1b) in the system, such that a train (50) of movable units is adapted to reverse its travelling direction by moving the master movable unit (20) to the other end of the train and continue travel in this reversed direction, preferably each slave movable unit (1a, 1b) reverses the direction of travel when performing the reverse direction operation or each slave movable unit (1a, 1b) turns into the new direction by performing an on the spot rotating movement by rotating around an axis of rotation that penetrates the load surface (100).

11. Material handling system (100) according to any of the claims above, wherein at least one movable unit (1, 20) comprises a lifting device, preferably in the form of a scissor lift device (70), such that an operator (60) at order picking can have an ergonomic height for picking and putting goods on the load surface (10) of the movable units (1, 20), preferably the operation of the scissor lift device (70) is remotely operated by the operator (60) via the wireless interface of the respective movable unit (1, 20).

12. Material handling system (100) according to any of the claims above, comprising an external control central (40), that is arranged to be adapted to send a dedicated signal to a particular movable unit (1c, 1d, 1e), said signal comprising a navigation data, wherein the particular movable unit (1, 20) is arranged to be adapted to apply the navigation data by the navigation device (28), such that it is able to move to a new position according to the received navigation data.

13. Material handling system (100) according to any of the claims above, wherein the height of the moving unit is achieved by applying a swivelling support wheel (5, 19) that has a bearing (93) that runs close to the periphery of the housing (92) of the wheel (5, 19), thereby achieving a relatively low and compact support wheel (5, 19).

14. Material handling system (100) according to any of the claims above, wherein the base height is comprised between 50 mm - 350 mm, preferably 100 mm - 250 mm, most preferred 100 mm-200 mm, preferably the maximal outer dimensions of each movable unit (1, 20) of the system (100) is equal to or less a length of 1210 mm and a width of 810 mm.

## Patentansprüche

1. Materialhandhabungssystem (100), umfassend eine Gruppe von beweglichen Einheiten (1, 20), wobei jede bewegliche Einheit (1, 20) umfasst:
eine Energiequelle (2),
einen Antriebsmotor (3),
ein Antriebsrad (4, 13), das von dem \Antriebsmotor (3, 15) mit Energie versorgt wird,
ein stabilisierendes Stützrad (5),
einen Objektsensor (6, 19, 29) zum Detektieren von Objekten in der Umgebung der beweglichen Einheit,
eine drahtlose Schnittstelle (7) zum Kontakt mit den anderen beweglichen Einheiten des Systems,
eine Steuereinheit (8),
eine Ladefläche (10),
eine Navigationsvorrichtung (28),
wobei jede bewegliche Einheit eine begrenzte Basishöhe aufweist, wobei unter der Basishöhe die Höhe des mittleren Oberflächenbereichs der Einheit, welche die Ladefläche (10) umfasst, gegenüber der Oberfläche, auf der die bewegliche Einheit betrieben wird, gemeint ist,
**dadurch gekennzeichnet,**
**dass** das System mindestens eine bewegliche Einheit (20) umfasst, die zu einer beweglichen Master-Einheit (20) ernannt ist und die anderen beweglichen Einheiten (1) zu beweglichen Slave-Einheiten (20) für die bewegliche Master-Einheit (20) ernannt sind, wobei die bewegliche Master-Einheit (20) anhand der drahtlosen Schnittstelle (7) angepasst ist, um ein Verfolgungssignal (25) auszusenden, das durch enthaltene drahtlose Schnittstellen (7) durch die beweglichen Slave-Einheiten (1) des Systems (100) derart detektiert werden kann, dass jede bewegliche Slave-Einheit (1) einen vorbestimmten Abstand zu der beweglichen Master-Einheit (20) bestimmen und einhalten kann, wobei jede bewegliche Einheit (1, 20) als bewegliche Master- oder Slave-Einheit zugeteilt wird, indem eine computerausführbare Software angewendet wird, die in der Steuereinheit (8) gespeichert und dazu konfiguriert ist, die bewegliche Einheit als bewegliche Master-(20) oder Slave- (1) Einheit zuzuteilen, wobei die drahtlosen Schnittstellen der beweglichen Einheiten (1, 20) bevorzugt mindestens eine Antenne (17, 18, 26) umfassen.

2. Materialhandhabungssystem (100) nach Anspruch 1, wobei die Rotationsachse (12, 14) des Antriebsrads (4) jeder beweglichen Einheit (1, 20) derart positioniert ist, dass die bewegliche Einheit (1, 20) dazu geeignet ist, sich um einen Punkt herum zu drehen, der in einem Bereich positioniert ist, der durch 25 % bis 75 % der längsgerichteten Länge und 0 % bis 100 %, bevorzugt 25 % bis 75 %, der quergerichteten Breite des Außenumfangs der beweglichen Einheit (1, 20) vorbestimmt ist.

3. Materialhandhabungssystem (100) nach Anspruch 1 oder 2, wobei ferner jede bewegliche Einheit ein zweites Antriebsrad (13) umfasst, das eine Rotationsachse (14) aufweist, wobei das zweite Antriebsrad bevorzugt auf der gegenüberliegenden Längsseite des ersten Antriebsrads (4) positioniert ist, und noch weiter bevorzugt die Rotationsachse (14) des zweiten Antriebsrads (13) zu der Rotationsachse (12) des ersten Rotationsantriebsrads (4) koaxial ist.

4. Materialhandhabungssystem (100) nach einem der Ansprüche 1, wobei jede bewegliche Einheit (1, 20) einen Hardware-Schalter (9) umfasst, der dazu konfiguriert ist, die bewegliche Einheit (1, 20) als Master oder Slave zuzuteilen, wobei der Hardware-Schalter (9) bevorzugt gegenüber einer Zuteilung, die von einer computerausführbaren Software, die in der Steuereinheit (8) gespeichert ist, vorgenommen wird, vorrangig ist.

5. Materialhandhabungssystem (100) nach einem der Ansprüche 1, wobei die bewegliche Master-Einheit (20) einen Haltegriff (22) umfasst, der höher als die begrenzte Basishöhe ist, wobei der Haltegriff (22) derart angeordnet ist, dass ein Bediener (60), der mit der beweglichen Master-Einheit (20) fährt, diesen zum Ausbalancieren festhalten kann, wobei die bewegliche Master-Einheit (20) ansonsten mit der gleichen Hardware wie die bewegliche Slave-Einheit (1) konfiguriert ist.

6. Materialhandhabungssystem (100) nach einem der Ansprüche 1 oder 4 bis 5, wobei mindestens zwei der beweglichen Einheiten (1, 20) des Systems (100) einen Anbringungspunkt (23) für einen Haltegriff (22) aufweisen, und wobei eine bewegliche Einheit (1, 20) als eine bewegliche Master-Einheit zugeteilt wird, indem ein Haltegriff an eine bewegliche Einheit (1, 20) angelegt wird, die als bewegliche Master-Einheit zugeteilt werden soll, wobei der Anbringungspunkt (23) mit einem Detektor (27) versehen ist, der dazu geeignet ist, zu detektieren, dass ein Haltegriff (22) angebracht ist, und um dies der Steuereinheit (8) mitzuteilen, und durch diesen Detektor (27) die Zuteilung als bewegliche Master-Einheit (20) durch die Installation des Haltegriffs (22) ermöglicht wird, wobei bevorzugt die Zuteilung als Master durch das Anbringen eines Haltegriffs (22) gegenüber anderen möglichen Zuteilungen als Master vorrangig ist, wobei sogar weiter bevorzugt alle beweglichen Einheiten (1, 20) den Anbringungspunkt (23) aufweisen, der den Detektor (27) umfasst.

7. Materialhandhabungssystem (100) nach Anspruch 5 oder 6, wobei der Haltegriff (22) mit einer Antenne (26) zur Kommunikation über die drahtlose Schnittstelle (7), wie etwa zum Aussenden eines Verfolgungssignals (25), versehen ist.

8. Materialhandhabungssystem (100) nach einem der Ansprüche 5 bis 7, wobei der Haltegriff (22) ferner eine Steuerbefehlszentrale (80) umfasst, wobei die Steuerbefehlszentrale eine Anzeige (82) zur Kommunikation mit einem Bediener (60) und eine lokale Steuereinheit (82) aufweist, die dazu geeignet ist, Befehle an das Materialhandhabungssystem (100) zur Steuerung von Kommissionierdiensten durch den Bediener (60) zu verarbeiten und zu erteilen.

9. Materialhandhabungssystem (100) nach einem der Ansprüche 1 oder 4 bis 8, wobei, wenn eine bewegliche Einheit als bewegliche Slave-Einheit (1) zugeteilt ist, die bewegliche Slave-Einheit (1) derart angeordnet ist, dass sie dazu geeignet ist, ein Verfolgungssignal (25) der beweglichen Master-Einheit (20) anhand der drahtlosen Schnittstelle (7) zu detektieren, und die Steuereinheit (8) der beweglichen Einheit dazu geeignet ist, eine Position in einer Gruppe von beweglichen Slave-Einheiten (1) durch Kombinieren von vorbestimmten Informationen aus dem Verfolgungssignal (25) und den detektierten Informationen von dem Objektsensor (6) der beweglichen Slave-Einheit (1) zu bestimmen, wobei das System (100) dadurch bevorzugt einen Zug (50) von beweglichen Einheiten (1, 20) mit dedizierten Positionen für jede bewegliche Einheit (1, 20) erstellen kann, wobei die bewegliche Master-Einheit (20) den Zug (50) anführt und die beweglichen Slave-Einheiten (1) der beweglichen Master-Einheit (20) anhand des Verfolgungssignals (25) und von Informationen von dem Objektsensor (6) folgen.

10. Materialhandhabungssystem (100) nach Anspruch 9, wobei das Verfolgungssignal (25) von der beweglichen Master-Einheit (20) dazu geeignet ist, eine neue Position für eine bewegliche Slave-Einheit (1a, 1b) in dem System zuzuteilen, so dass ein Zug (50) von beweglichen Einheiten dazu geeignet ist, seine Fahrtrichtung umzukehren, indem er die bewegliche Master-Einheit (20) an das andere Ende des Zugs setzt und in dieser umgekehrten Richtung weiterfährt, wobei bevorzugt jede bewegliche Slave-Einheit (1a, 1b) die Fahrtrichtung umkehrt, wenn sie den Wendevorgang ausführt, oder sich jede bewegliche Slave-Einheit (1a, 1b) in die neue Richtung dreht, indem sie eine Drehbewegung auf der Stelle ausführt, indem sie sich um eine Rotationsachse herum dreht, die in die Ladefläche (100) eindringt.

11. Materialhandhabungssystem (100) nach einem der vorherigen Ansprüche, wobei mindestens eine bewegliche Einheit (1, 20) eine Hebevorrichtung umfasst, bevorzugt in der Form einer Scherenhebevorrichtung (70), so dass ein Bediener (60) bei der Kommissionierung eine ergonomische Höhe haben kann, um Waren auf der Ladefläche (10) der beweglichen Einheiten (1, 20) zu entnehmen und abzusetzen, wobei bevorzugt der Betrieb der Scherenhebevorrichtung (70) entfernt durch den Bediener (60) über die drahtlose Schnittstelle der jeweiligen beweglichen Einheit (1, 20) erfolgt.

12. Materialhandhabungssystem (100) nach einem der vorherigen Ansprüche, umfassend eine externe Steuerzentrale (40), die dazu eingerichtet ist, dazu geeignet zu sein, ein dediziertes Signal an eine bestimmte bewegliche Einheit (1c, 1d, 1e) zu senden, wobei das Signal Navigationsdaten umfasst, wobei die bestimmte bewegliche Einheit (1, 20) dazu eingerichtet ist, dazu geeignet zu sein, die Navigationsdaten durch die Navigationsvorrichtung (28) derart anzuwenden, dass sie in der Lage ist, sich gemäß den empfangenen Navigationsdaten in eine neue Position zu begeben.

13. Materialhandhabungssystem (100) nach einem der vorherigen Ansprüche, wobei die Höhe der sich bewegenden Einheit erreicht wird, indem ein schwenkbares Stützrad (5, 19) angewendet wird, das ein Lager (93) aufweist, das nahe am Umfang des Gehäuses (92) des Rades (5, 19) verläuft, wodurch ein relativ niedriges und platzsparendes Stützrad (5, 19) erreicht wird.

14. Materialhandhabungssystem (100) nach einem der vorherigen Ansprüche, wobei die Basishöhe zwischen 50 mm bis 350 mm, bevorzugt 100 mm bis 250 mm, höchst bevorzugt 100 mm bis 200 mm liegt, wobei die maximalen Außenabmessungen jeder beweglichen Einheit (1, 20) des Systems (100) bevorzugt gleich oder kleiner als eine Länge von 1210 mm und eine Breite von 810 mm sind.

## Revendications

1. Système de manutention de matériaux (100) comprenant un groupe d'unités mobiles (1, 20), dans lequel chaque unité mobile (1, 20) comprend
une source de puissance (2),
un moteur d'entraînement (3),
une roue motrice (4, 13) entraînée par le moteur d'entraînement (3, 15),
une roue d'appui stabilisatrice (5),
un capteur d'objet (6, 19, 29) pour détecter des objets dans l'environnement de l'unité mobile,
une interface sans fil (7) pour le contact avec les autres unités mobiles du système, une unité de commande (8),
une surface de charge (10),
un dispositif de navigation (28),
dans lequel chaque unité mobile présente une hauteur de base limitée, la hauteur de base représentant la hauteur de la surface moyenne de l'unité comprenant la surface de charge (10), au-dessus de la surface sur laquelle l'unité mobile fonctionne,
**caractérisé en ce que**
le système comprend au moins une unité mobile (20) qui est désignée en tant qu'unité mobile maître (20) et les autres unités mobiles (1) sont attribuées en tant qu'unités mobiles esclaves (1) à ladite unité mobile maître (20), dans lequel l'unité mobile maître (20) au moyen de l'interface sans fil (7) est capable d'envoyer un signal de piste (25) qui peut être détecté par une interface sans fil comprise (7) par des unités mobiles esclaves (1) du système (100) si bien que chaque unité mobile esclave (1) est capable de déterminer et de garder une distance prédéterminée par rapport à ladite unité mobile maître (20), dans lequel chaque unité mobile (1, 20) est attribuée en tant qu'unité mobile maître ou esclave par application d'un logiciel exécutable par ordinateur stocké dans l'unité de commande (8) qui est configuré pour attribuer l'unité mobile en tant qu'unité mobile maître (20) ou esclave (1), de préférence les interfaces sans fil des unités mobiles (1, 20) comprennent au moins un antenne (17, 18, 26).

2. Système de manutention de matériaux (100) selon la revendication 1, dans lequel l'axe de rotation (12, 14) de la roue motrice (4) de chaque unité mobile (1, 20) est positionné si bien que l'unité mobile (1, 20) est adapté pour tourner autour d'un point positionné dans une zone qui est prédéterminée par 25% à 75% de la longueur longitudinale et 0% à 100%, de préférence 25% à 75% de la largeur transversale du périmètre extérieur de l'unité mobile (1, 20).

3. Système de manutention de matériaux (100) selon la revendication 1 ou 2, dans lequel en outre chaque unité mobile comprend une deuxième roue motrice (13) ayant un axe de rotation (14), de préférence la deuxième roue motrice est positionnée au côté longitudinal opposé de la première roue motrice (4), encore plus préféré l'axe de rotation (14) de la deuxième roue motrice (13) est coaxial avec l'axe de rotation (12) de la première roue motrice de rotation (4).

4. Système de manutention de matériaux (100) selon l'une quelconque des revendications 1, dans lequel chaque unité mobile (1, 20) comprend un commutateur de matériel (9) qui est configuré pour attribuer l'unité mobile (1, 20) en tant que maître ou esclave, de préférence le commutateur de matériel (9) effectue une priorité sur une attribution effectuée par un logiciel exécutable par ordinateur stocké dans l'unité de commande (8).

5. Système de manutention de matériaux (100) selon l'une quelconque des revendications 1, dans lequel l'unité mobile maître (20) comprend une poignée (22) qui est plus haute que la hauteur de base limitée, dans lequel la poignée (22) est agencée si bien qu'un l'opérateur (60) se déplaçant avec l'unité mobile maître (20) peut la retenir à des fins d'équilibre, de préférence l'unité mobile maître (20) est par ailleurs configurée avec le même matériaux qu'une unité mobile esclave (1).

6. Système de manutention de matériaux (100) selon l'une quelconque des revendications 1 ou 4 à 5, dans lequel au moins deux des unités mobiles (1, 20) du système (100) présentent un point de fixation (23) pour une poignée (22), et qu'une unité mobile (1, 20) est attribuée en tant qu'unité mobile maître par application d'une poignée à une unité mobile (1, 20) destinée à être attribuée en tant qu'unité mobile maître,
dans lequel le point de fixation (23) est pourvu d'un détecteur (27) qui est adapté pour détecter qu'une poignée (22) est attachée et le communiquer à l'unité de commande (8) et par ce détecteur (27), l'affectation en tant qu'unité mobile maître (20) est activée par l'installation de la poignée (22), de préférence l'attribution en tant que maître par application d'une poignée (22) prend une priorité sur d'autres attributions possibles en tant que maître, encore plus préférablement toutes les unités mobiles (1, 20) présentent ledit point de fixation (23) comprenant ledit détecteur (27).

7. Système de manutention de matériaux (100) selon la revendication 5 ou 6, dans lequel la poignée (22) est pourvue d'une antenne (26) pour une communication sur l'interface sans fil (7), p.ex. pour envoyer un signal de piste (25).

8. Système de manutention de matériaux (100) selon l'une quelconque des revendications 5 à 7, dans lequel la poignée (22) comprend en outre une centrale de commande de contrôle (80), la centrale de commande de contrôle comporte un dispositif d'affichage (82) pour communiquer avec un opérateur (60) et comporte une unité de commande locale (82) qui est adaptée pour traiter et donner des commandes au système de manutention de matériaux (100) pour la commande d'ordres de services de prélèvement par l'opérateur (60).

9. Système de manutention de matériaux (100) selon l'une quelconque des revendications 1 ou 4 à 8, dans lequel lorsqu'une unité mobile est affectée en tant qu'unité mobile esclave (1), l'unité mobile esclave (1) est agencée si bien qu'elle est adaptée pour détecter un signal de piste (25) de l'unité mobile maître (20), au moyen de l'interface sans fil (7), et l'unité de commande (8) de l'unité mobile est adaptée pour déterminer une position dans un groupe d'unités mobiles esclaves (1) en combinant des informations prédéterminées provenant du signal de piste (25) et les informations détectées provenant du capteur d'objet (6) de l'unité mobile esclave (1), dans lequel le système (100) peut de préférence ainsi créer un train (50) d'unités mobiles (1, 20) avec des positions dédiées pour chaque unité mobile (1, 20), dans lequel l'unité mobile maître (20) mène le train (50), et la ou les unités mobiles esclaves (1) suivent l'unité mobile maître (20) au moyen du signal de piste (25) et d'informations du capteur d'objet (6).

10. Système de manutention de matériaux (100) selon la revendication 9, dans lequel le signal de piste (25) provenant de l'unité mobile maître (20) est adapté pour affecter une nouvelle position pour une unité mobile esclave (1a, 1b) dans le système, si bien qu'un train (50) d'unités mobiles est adapté pour inverser son sens de marche en déplaçant l'unité mobile maître (20) à l'autre extrémité du train et continuer à se déplacer dans ce sens inversé, de préférence chaque unité mobile esclave (1a, 1b) inverse le sens de marche en effectuant l'opération de sens inverse, ou chaque unité mobile esclave (1a, 1b) tourne dans le nouveau sens en effectuant un mouvement de rotation sur place en tournant autour d'un axe de rotation qui pénètre dans la surface de charge (100).

11. Système de manutention de matériaux (100) selon l'une quelconque des revendications précédentes, dans lequel au moins une unité mobile (1, 20) comprend un dispositif de levage, de préférence dans la forme d'un dispositif élévateur à ciseaux (70), si bien qu'un opérateur (60), à l'ordre de prélèvement, peut avoir une hauteur ergonomique pour prélever et déposer des marchandises sur la surface de chargement (10) des unités mobiles (1, 20), de préférence le fonctionnement du dispositif de levage à ciseaux (70) est commandé à distance par l'opérateur (60) via l'interface sans fil de l'unité mobile respective (1, 20).

12. Système de manutention de matériaux (100) selon l'une quelconque des revendications précédentes, comprenant une centrale de commande externe (40) qui est agencée pour être adapté de manière à envoyer un signal dédié à une unité mobile particulière (1c, 1d, 1e), ledit signal comprenant des données de navigation, dans lequel l'unité mobile dédiée (1, 20) est agencée pour être adapté de manière à appliquer les données de navigation par le dispositif de navigation (28), si bien qu'elle est capable de se déplacer vers une nouvelle position selon les données de navigation reçues.

13. Système de manutention de matériaux (100) selon l'une quelconque des revendications précédentes, dans lequel la hauteur de l'unité mobile est obtenue en appliquant une roue de support pivotante (5, 19) ayant un palier (93) qui s'étend à proximité de la périphérie du boîtier (92) de la roue (5, 19), réalisant ainsi une roue de support relativement basse et compacte (5, 19).

14. Système de manutention de matériaux (100) selon l'une quelconque des revendications précédentes, dans lequel la hauteur de base est comprise entre 50 mm et 350 mm, de préférence entre 100 mm et 250 mm, de préférence entre 100 mm et 200 mm, de préférence les dimensions extérieures maximales de chaque unité mobile (1, 20) du système (100) est égale ou inférieure à une longueur de 1210 mm et une largeur de 810 mm.
